# EUROPEAN PATENT APPLICATION

(11) **EP 1 666 225 A1**
(43) Date of publication of application: **07.06.2006**
(21) Application number: 05025502.5
(22) Date of filing: 23.11.2005
(51) Int. Cl.: B29C 37/00, B29C 45/16, B29C 45/56, B29C 67/24

(54) **Method of preparing a coated molded article**

(30) Priority: 06.12.2004 US 5178
(71) Applicant: Bayer MaterialScience LLC, Pittsburgh PA 15205 (US)
(72) Inventor: Cooper, Christopher, Moon Township PA 15108 (US); Palmer, Timothy A., Moon Township PA 15108 (US)
(74) Representative: Bramer-Weger, Elmar

(57) **Abstract**

The present invention relates to a method of preparing a coated molded article (59) by means of in-mold coating. The method involves the use of a mold apparatus (1) that includes a rotatable core (29) having at least one molding surface (32, 35), a first die (11) and a second die (17) each having an internal surface (14, 20) and each of which are reversibly engageable with the rotatable core. The second die (17) has a reversibly slidable portion (23) having an internal surface (26) that defines substantially the internal surface (20) of the second die (17). The internal surface (14) of the first die (11) and a molding surface (32) of the rotatable core together define a first mold cavity (38) in which a molded plastic article (44) is formed. The mold apparatus is opened, the core (29) is rotated to align the molded plastic article (44) with the internal surface (20) of the second die (17). The second die (17) is engaged with the rotatable core (29), and an intermediate second mold cavity (53) is formed, into which a coating composition (56) is introduced. The reversibly slidable portion (23) of the second die (17) is moved towards the rotatable core (29), thus reducing the volume of the intermediate second mold cavity (53) and causing the coating composition (56) introduced therein to spread over the first surface (50) of the molded plastic article (44). The mold apparatus (1) is opened and a coated molded article (59) is removed from the rotatable core (29). The present invention also relates to a mold apparatus (1).

## Description

### FIELD OF THE INVENTION

The present invention relates to a method of preparing a coated molded article by means of in-mold coating. The method involves the use of a mold apparatus that includes: a rotatable core having at least one molding surface; a first die and a second die each having an internal surface; and at least two separate mold cavities. The second die has a reversibly slidable portion having an internal surface that defines substantially the internal molding surface of the second die. A plastic molded article is formed in a first mold cavity defined in part by the first die, the core is rotated, and a coating is applied to the plastic molded article in a separate second mold cavity that is defined in part by the slidable portion of the second die. The slidable portion of the second die is moved towards the core causing the coating to be spread over the surface of the molded article. The present invention also relates to a mold apparatus.

### BACKGROUND OF THE INVENTION

Molded plastic articles are utilized in a number of areas, such as, interior and exterior components of motor vehicles (e.g., automobiles, trucks and aircraft), housings for electronic devises and lenses (e.g., ophthalmic lenses and lenses for motor vehicle head lights and break lights). For purposes of improved aesthetic appearance and/or physical properties (e.g., smoothness, weatherability and/or photochromaticity) it may be desirable to apply a coating or coatings to the surface of a molded plastic article.

Coatings may be applied to the surface of a molded plastic article after removal of the article from the mold in which it is formed. The post-mold (or extra-mold) application of coatings to molded plastic articles typically results in the formation of coatings that suffer from deficiencies such as, poor appearance due to, for example, poor wetting of the plastic surface, and a lack of electrical and/or thermal conductivity of the molded plastic article.

The in-mold application of coatings to molded plastic articles is known. Relative to post-mold applications, the in-mold application of coatings to molded plastic articles provides advantages including: improved smoothness of the coating (due to the coating surface being defined by the interior surface of the mold); improved uniform thickness of the coating; and improved adhesion of the coating to the molded plastic article (e.g., due the cure of thermosetting coatings within the mold and/or mold pressures that serve to drive a portion of the coating into the surface of the molded plastic article).

The in-mold application of coatings to molded plastic articles typically involves (e.g., as described in United States Patent Numbers 4,081,578, 4,668,460, and 5,387,750) first forming a molded article in a mold, partially opening the mold to form a space between the molded article and an interior surface of the mold, introducing a coating composition into the mold, curing the coating within the mold, and removing the coated article from the mold. Such in-mold coating methods typically suffer from inefficiencies, such as low product formation rates due to a single mold being used for both molding and coating operations. That is, a subsequent plastic molded article can not be formed until the in-mold coating steps are completed. In addition, with such prior in-mold coating methods, adjusting the temperature under which the coating is formed is typically limited, because the same mold is used for both formation of the molded plastic article and formation of the coating layer.

International Application Publication No. WO 03/049929 A1, published under the Patent Cooperation Treaty, discloses a method of applying an ultraviolet light curable paint to molded parts using a turnable mold. WO 03/049929 A1 does not disclose shaping or forming the surface of the paint by contact thereof with an internal mold surface.

United States Patent Application No. US 2003/0197307 (the '307 application) discloses a method for injection molding and successive decoration molding of a molded product. The '307 application discloses the use of a mold apparatus having two separate mold cavities each having fixed volumes.

It would be desirable to develop additional methods of preparing coated molded plastic articles by in-mold coating processes. It would be desirable that such newly developed in-mold coating methods provide, for example, improved product formation rates, and an independence of temperature between the molded article and coating formation steps. In addition, it would be desirable to develop new mold apparatuses that may be used to prepare in-mold coated plastic articles.

### SUMMARY OF THE INVENTION

In accordance with the present invention, there is provided a method of preparing a coated molded article comprising:
(A) providing a mold apparatus comprising,
   (i) a first die having an internal surface,
   (ii) a second die having an internal surface, said second die having a reversibly slidable portion, said reversibly slidable portion having an internal surface, the internal surface of said reversibly slidable portion defining substantially the internal surface of said second die, and
   (iii) a core having one or more molding surfaces, and said core
      being rotatable,
   wherein said first die and said second die are each reversibly and
   separately engageable with said core,
   when said first die is engaged with said core the internal surface of said first die and one of said molding surfaces of said core together define a first mold cavity,
   when said second die is engaged with said core said internal surface of said second die and one of said molding surfaces of said core together define a second mold cavity, the molding surface of said core defining said second mold cavity being the same or different than the molding surface of said core defining said first mold cavity;
(B) engaging at least said first die with said core and forming said first mold cavity;
(C) introducing plastic material into said first mold cavity to form an uncoated molded article having a second surface that abuts the molding surface of said core which defines said first mold cavity, and having a first surface that is substantially opposed to said second surface;
(D) disengaging at least said first die from said core;
(E) rotating said core with said uncoated molded article on said molding surface of said core, and aligning the first surface of said uncoated molded article with the internal surface of said second die;
(F) engaging said second die with said core such that the internal surface of said second die and the first surface of said uncoated molded article together define an intermediate second mold cavity, said intermediate second mold cavity having a volume;
(G) introducing a coating composition into said intermediate second mold cavity;
(H) moving said reversibly slidable portion of said second die towards said core, thereby reducing the volume of said intermediate second mold cavity and causing said coating composition introduced into said intermediate second mold cavity to spread over at least a portion of said first surface of said uncoated molded article, thereby forming a coated molded article;
(I) disengaging at least said second die from said core;
(J) removing said coated molded article from said core; and
(K) optionally rotating said core such that one of said molding surfaces of said core is aligned with the internal surface of said first die, and repeating steps (B) through (J).

In further accordance with the present invention, there is provided a method of preparing a coated molded article comprising steps (A) through (E) and (I) through (K) as described above, but in which steps (F) through (H) are as follows:
(F) engaging said second die with said core such that,
   (i) the internal surface of said second die substantially abuts the first surface of said uncoated molded article, or
   (ii) the internal surface of said second die and the first surface of said uncoated molded article together define an initial second mold cavity having a volume;
(G) introducing a coating composition between said internal surface of said second die and said first surface of said uncoated molded article, said internal surface of said second die being concurrently separated from said first surface of said uncoated molded article thus forming an intermediate second mold cavity having a volume, the volume of said intermediate second mold cavity being greater than the volume of said initial second mold cavity; and
(H) moving said reversibly slidable portion of said second die towards said core, thereby reducing the volume of said intermediate second mold cavity and causing said coating composition residing in said intermediate second mold cavity to spread over at least a portion of said first surface of said uncoated molded article, thereby forming a coated molded article.

In further accordance with the present invention there is provided a mold apparatus as described in step (A) above.

The features that characterize the present invention are pointed out with particularity in the claims, which are annexed to and form a part of this disclosure. These and other features of the invention, its operating advantages and the specific objects obtained by its use will be more fully understood from the following detailed description and accompanying drawings.

Unless otherwise indicated, all numbers or expressions, such as those expressing structural dimensions, process conditions, etc. used in the specification and claims are understood as modified in all instances by the term "about."

### BRIEF DESCRIPTION OF THE DRAWINGS

Figure 1 is a representative sectional view of a mold assembly 1 used in the method of the present invention, in which the first 11 and second 17 dies are engaged with the core 29, but no plastic material or coating composition has been introduced into the mold cavities;
Figure 2 is a representative sectional view of the mold assembly of Figure 1, in which plastic material has been introduced into first mold cavity 38;
Figure 3 is a representative sectional view of the mold assembly of Figure 2, with the first 11 and second 17 dies disengaged from the core 29;
Figure 4 is a representative sectional view of the mold assembly of Figure 3 showing the core 29 being rotated such that the uncoated molded article 44 is aligned with the interior surface 20 of the second die 17;
Figure 5 is a representative sectional view of the mold assembly of Figure 4 with the first 11 and second 17 dies engaged with the core 29;
Figure 6 is a representative sectional view of the mold assembly of Figure 5 with a coating composition 56 introduced into the intermediate second mold cavity 53;
Figure 7 is a representative sectional view of the mold assembly of Figure 6 in which the slidable portion 23 of second die 17 is moved towards core 29 and the coating 56 is spread over the first surface 50 of molded plastic article 44;
Figure 8 is a representative sectional view of the mold assembly of Figure 7 with first die 11 and second die 17 disengaged from core 29, and the coated molded article 59 being removed from the core 29;
Figure 9 is a representative sectional view of the mold assembly of Figure 8 in which a further molded plastic article 62 has been formed on molding surface 35 of the core 29 prior to disengaging first die 11 from core 29;
Figure 10 is a representative sectional view of a portion of a mold assembly similar to that of Figure 5 that further includes a molded article 44' having a molded-in seal 110;
Figure 11 is a representative sectional view of a mold assembly similar to that of Figure 5 in which the slidable portion 23 of second die 17 further includes a reversibly retractable masking extension 119; and
Figure 12 is a representative section view of a mold assembly similar to that of Figure 5 in which the mold apparatus further includes a first means 3 of controlling the temperature of the first mold cavity 38, and a second means 5 of controlling the temperature of the intermediate second mold cavity 53.

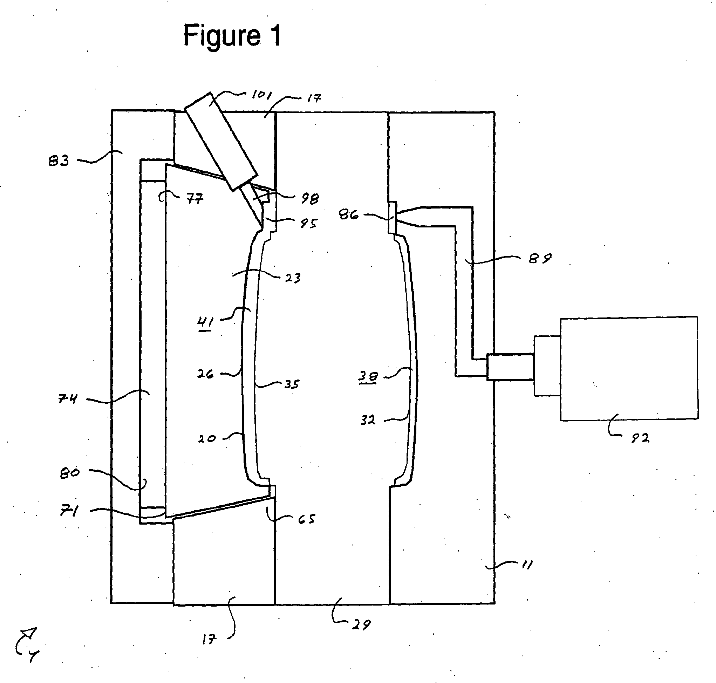

In Figures 1 through 12, unless otherwise indicated, like reference numerals and characters designate the same components and structural features.

### DETAILED DESCRIPTION OF THE INVENTION

In the method of the present invention there is provided a mold apparatus. With reference to the drawing figures, the mold apparatus 1 includes a first die 11, which has an internal surface 14, a second die 17 having an internal surface 20, and a reversibly rotatable core 29 having at least one molding surface (e.g., 32 and 35). The second die 17 includes a reversibly slidable portion 23 having an internal surface 26. The internal surface 26 of slidable portion 23 substantially defines the internal surface 20 of second die 17. Preferably, the internal surface 26 of slidable portion 23 and the internal surface 20 of second die 17 are one and the same. As used herein and in the claims, with regard to the dies of the molding apparatus (e.g., first die 11 and second die 17), the term "internal surface" means an internal molding surface for forming a molded article (in the case of first die 11) or a coated molded article (in the case of second die 17).

The components of the mold apparatus of the present invention may be fabricated from suitable materials that are known to the skilled artisan. Typically, the components of the mold apparatus (e.g., the first die, second die, slidable portion of the second die, and the rotatable core) are fabricated from metals, such as steel, e.g., tool steel. The molding surfaces of the core and the internal surfaces of the first and second dies may each independently be polished steel surfaces, stainless steel surfaces, plated nickel surfaces or nickel / polytetrafluoroethylene surfaces.

The first die 11 and the second die 17 are each reversibly and separately / independently engageable with core 29, and accordingly core 29 is reversibly and independently engageable with each of first die 11 and second die 17. Engagement of first die 11 and second die 17 with core 29 may be achieved by means of first die 11 and second die 17 each being reversibly and independently moveable towards and/or away from core 29 (core 29 being substantially stationary relative to lateral movement). Alternatively, only one of first die 11 and second die 17 may be moved towards or away from core 29, while the other die remains engaged with or disengaged from core 29.

As used herein and in the claims with regard to the first die, second die and core, the term "engaged with" and similar terms means that a die (e.g., first die 11) and the core (e.g., core 29) are moved / positioned into an abutting relationship with each other such that a mold cavity is formed or potentially formed (e.g., first mold cavity 38 and second mold cavity 41).

In a preferred embodiment, first die 11 is maintained substantially stationary relative to lateral movement, and second die 17 and core 29 are each reversibly and independently moveable (laterally) towards and/or away from first die 11. In a particularly preferred embodiment of the present invention, first die 11 is maintained substantially stationary, and second die 17 and core 29 are laterally reversibly moveable in unison towards first die 11. For example, core 29 is moved towards and engaged with first die 11 thus forming first mold cavity 38, and concurrently second die 17 is moved towards and engaged with core 29 thus forming second mold cavity 41.

The reversible movement of second die 17, core 29 and first die 11 relative to each other may be achieved by art recognized methods. For example, each of second die 17 and core 29 may be movably fixed to rails (not shown) and reversibly moved by hydraulically driven drive arms (not shown).

The core of the molding apparatus of the present invention has at least one molding surface (e.g., 1, 2, 3, 4, 5, 6, 7 or 8 molding surfaces). As used herein and in the claims with reference to the core, the term "molding surface" and similar terms means a core surface upon which a molded plastic article may be formed. In the embodiment represented by mold apparatus 1 of the drawing figures, core 29 has two molding surfaces 32 and 35. A core having at least two molding surfaces allows for the simultaneous (or nearly simultaneous) performance of multiple operations. For example, a mold apparatus according to the present invention that includes a core having three or four molding surfaces (not shown) may be used to simultaneously perform plastic article molding, in-mold coating, molded article surface treatment and molding surface cleaning operations. In addition, a mold apparatus according to the present invention that includes a core having three or four molding surfaces (not shown) may be used to simultaneously perform plastic article molding, and the in-mold application of multiple coatings compositions, such as primer coatings, base coatings, clear coatings and hard-coatings compositions. With mold apparatus 1 of the drawing figures, which has two molding surfaces 32 and 35, plastic article molding and in-mold coating operations may be performed simultaneously.

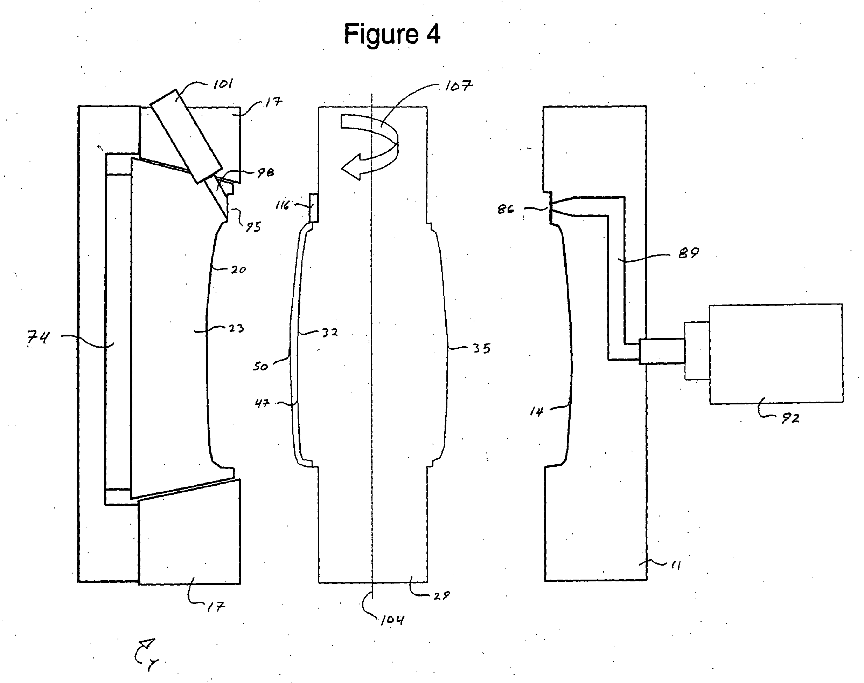

Core 29 of mold apparatus 1 may be rotated by methods that are known to the skilled artisan. For example, core 29 may be rotated by means of a shaft or shafts (not shown) extending outwardly from core 29 coextensively along longitudinal axis 104 (of Figure 4), the shaft(s) being turned manually or mechanically, e.g., by means of a motor or motors, or a hydraulic piston driving a rack and pinion (not shown). The core may be rotated clockwise or counter clockwise about its longitudinal axis or latitudinal axis. With reference to Figure 4, core 29 is rotated about its longitudinal axis 104 as indicated by arcuate arrow 107. Relative to Figure 1, core 29 has been rotated through 180° in Figure 4 (note the position of molding surfaces 32 and 35). Core 29 may be rotated through any degree of rotation up to and including 360°, or any multiple of degrees of rotation (e.g., multiples of 45°, 90°, 180° or 360°).

in addition to the first and second dies, the scope of the present invention is inclusive of a mold apparatus that includes additional dies, e.g., third and/or fourth dies (not shown) that are each separately and reversibly movable towards and engageable with the rotatable core. Such additional dies may be configured in accordance with first die 11 and/or second die 17. For example, an additional die configured in accordance with first die 11 allows for the formation of a coated molded article that includes a multilayered plastic molded article (e.g., having layers of different thermoplastic and/or thermosetting materials). Alternatively, or in addition thereto, an additional die configured in accordance with second die 17 (i.e., having a reversibly slidable portion) allows for the formation of a coated molded article having a multilayered coating (e.g., having a primer-coat layer and a top-coat layer).

The first, second and optional further dies may be positioned around the core at any degree (e.g., at 45°, 90° or 180°) relative to each other. First die 11 and second die 17 of mold apparatus 1 of the drawing figures are oriented in such a way as to be substantially opposed one from the other (i.e., oriented substantially 180° relative to each other). In addition, molding surfaces 32 and 35 of core 29 are substantially opposed to each other (i.e., oriented substantially 180° relative to each other).

When first die 11 is engaged with core 29, the interior surface 14 of first die 11 and one of the molding surfaces (e.g., molding surface 32) of core 29 together define a first mold cavity 38. The first mold cavity 38 has a volume, and is configured to define a plastic molded article that may be formed therein.

When second die 17 is engaged with core 29, the interior surface 20 (i.e., interior surface 26 of reversibly slidable portion 23) of second die 17 and one of the molding surfaces of core 29 (e.g., molding surface 35) together define a second mold cavity 41 having a volume. The molding surface of core 29 that defines the second mold cavity may be the same or different than the molding surface of the core that defines the first mold cavity. If the core has only one molding surface, then the first and second mold cavities would be defined by the same molding surface of the core. With mold apparatus 1 of the drawing figures, first mold cavity 38 is defined in part by molding surface 32 of core 29, and second mold cavity 41 is defined in part by molding surface 35 of core 29.

Alternatively, if core 29 is rotated through 180°, first mold cavity 38 would be defined in part by molding surface 35 of core 29, and second mold cavity 41 would be defined in part by molding surface 32 of core 29.

The volume of second mold cavity 41 is reversibly reduced by the movement of reversibly slidable portion 23 of second die 17 toward core 29. More particularly, as slidable portion 23 is moved towards core 29, internal surface 26 of slidable portion 23 (which substantially defines internal surface 20 of second die 17) moves closer to molding surface 35 of core 29. Still more particularly, and with reference to Figures 1, 6 and 7, when moved towards core 29, slidable portion 23 of second die 17 is moved from a first position 65 to a second position 68. When in second position 68, internal surface 20 of second die 17 is closer to a molding surface (e.g., 32 or 35) of core 29, relative to first position 65.

The slidable portion 23 of second die 17 may be reversibly moved towards core 29 by means of art recognized methods. With reference to Figure 1, slidable portion 23 has a second surface 71 that is substantially opposed to internal surface 26 thereof. Mold apparatus 1 further includes a drive arm 74 that is connected at its first end 77 to at least a portion of second surface 71 of slidable portion 23. Drive arm 74 is further attached at its second end 80 to a drive arm base 83. While drive arm 74 may be manually driven, it is preferred that it be mechanically driven. In an embodiment of the present invention, drive arm 74 is hydraulically driven (e.g., a hydraulically driven pancake cylinder).

The first die includes at least one first die port (or passage) that provides fluid communication with the first mold cavity. A first material (e.g., a thermoplastic or thermosetting plastic material) may be passed through the first die port into the first mold cavity. With reference to Figure 1, first die 11 includes a first die port 86 that is in fluid communication with first mold cavity 38. First die port 86 is also in fluid communication with a conduit 89 (which may optionally be heated) that is in fluid communication with a first reservoir 92 (or a plastics injection unit). The first material (e.g., a molten thermoplastic material) may be held in first reservoir 92 (which may be heated by means not shown) and from there passed through conduit 89, through first die port 86 and into first mold cavity 38.

The second die includes at least one second die port (or passage) that provides fluid communication with the second mold cavity (and also an intermediate second mold cavity as will be discussed further herein). A second material (e.g., a coating composition) may be introduced into the second mold cavity through the second die port. With reference to Figure 1, second die 17 includes a second die port 95 that is in fluid communication with second mold cavity 41. Second die port 95 is also in fluid communication with a conduit 98 that is in fluid communication with a second reservoir 101. The second material (e.g., a coating composition) may be held in second reservoir 101 and from there passed through conduit 98, through port 95 and into second mold cavity 41 (or intermediate second mold cavity 53 as will be discussed further herein).

The first and second dies may each independently and optionally include additional passages (not shown). Such additional passages may be used for the introduction of additional materials (e.g., co-reactants), or the same materials injected at different points, into the respective mold cavities. Additional passages may also be used to allow gasses (e.g., volatile blocking groups liberated from unblocked isocyanate groups) to escape from the respective mold cavities.

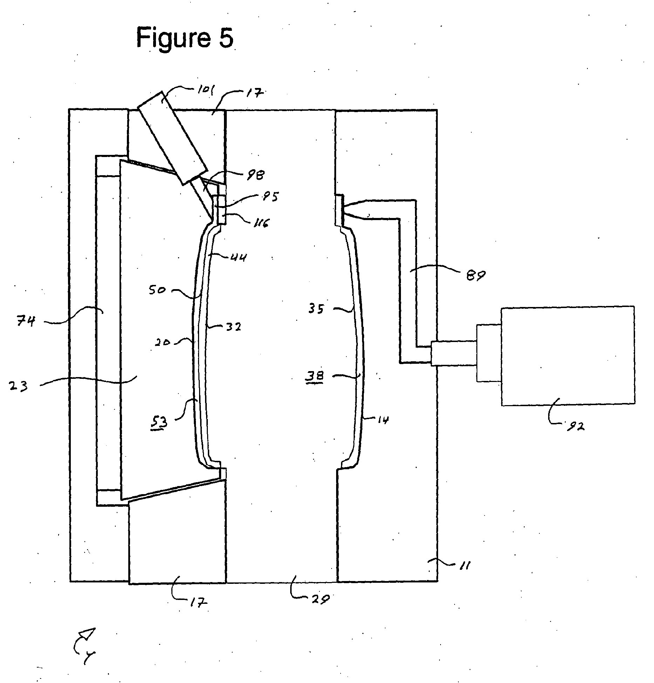

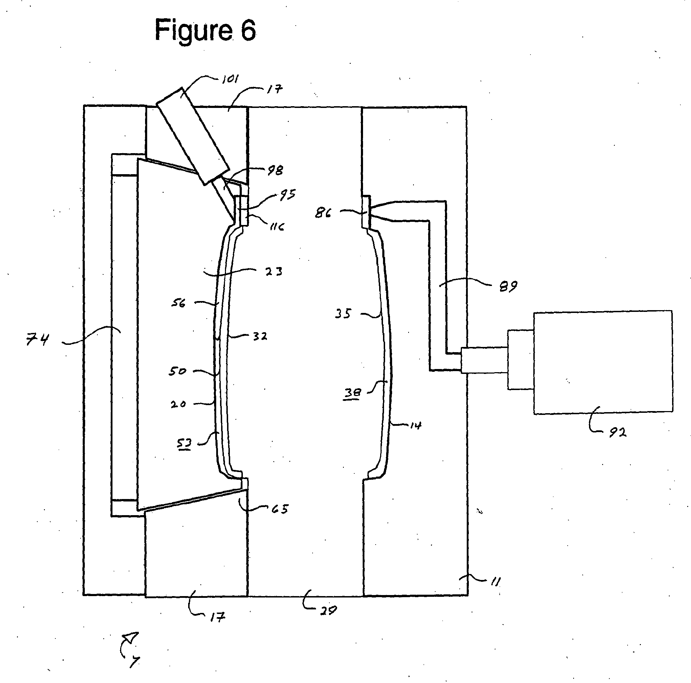

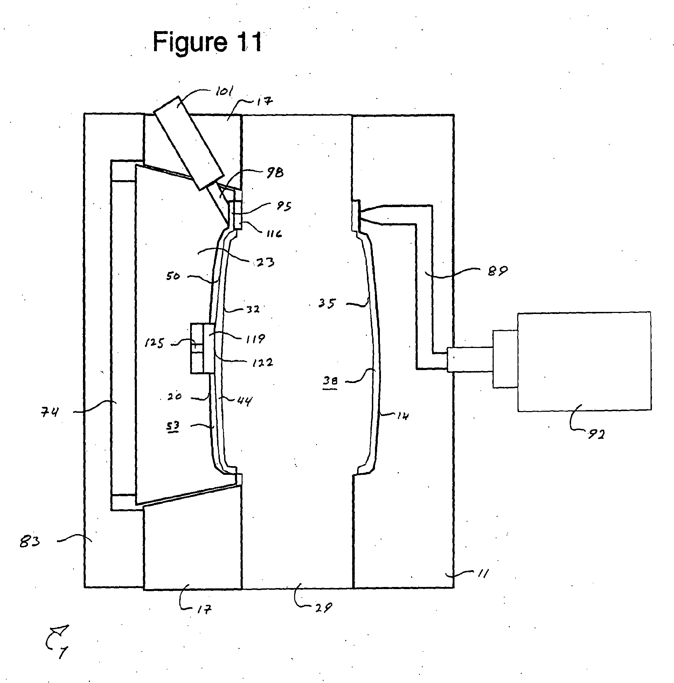

In an embodiment of the present invention, the reversibly slidable portion of the second die further includes at least one masking extension that extends beyond the internal surface of the reversibly slidable portion of the second die towards the core. The masking extension is configured to abut a portion of the first surface of an uncoated molded article residing within the second mold cavity (as will be discussed in further detail herein). The masking extension may be a stationary masking extension or a reversibly retractable masking extension. With reference to Figures 5 and 11 of the drawings, reversibly slidable portion 23 of second die 17 includes a reversibly retractable masking extension 119. Reversibly retractable masking extension 119 has a surface 122 that extends (retractably) beyond internal surface 20 of reversibly slidable portion 23 of second die 17. Surface 122 of reversibly retractable masking extension 119 is configured to engage abuttingly with the first surface (e.g., 50) of an uncoated molded article (e.g., 44) that resides within second mold cavity 41, as will be discussed in further detail herein. Reversibly retractable masking extension 119 may be moved towards or away from core 29 (and correspondingly first surface 50 of molded article 44) by means that are known to the skilled artisan (e.g., a hydraulic piston 125). Alternatively, reversibly retractable masking extension 119 may be biased against first surface 50 of uncoated molded article 44 by a biasing means, e.g., a spring (not shown). When in abutting relationship with first surface 50 of uncoated molded article 44, masking extension 119 prevents a coating composition (e.g., 56 of Figure 6) introduced into intermediate second mold cavity 53 from coating that portion (i.e., the masked portion) of the molded article.

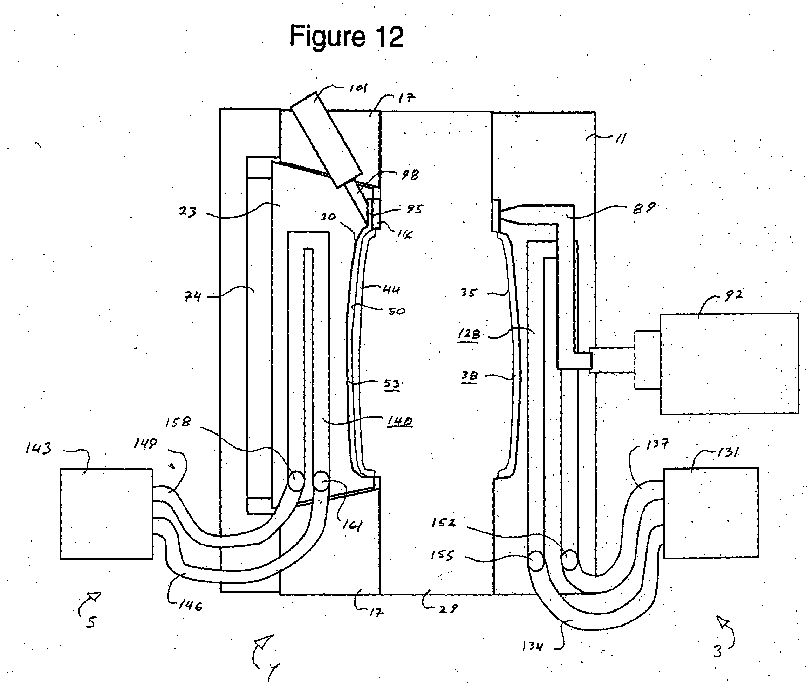

The molding apparatus of the present invention may further include separate means (e.g., first and second means) for separately controlling the temperatures of the first and second mold cavities. With reference to Figures 5 and 12 of the drawings, the molding apparatus further includes a first means 3 for controlling the temperature of first mold cavity 38, and a second means 5 for controlling the temperature of the second mold cavity 41 (and accordingly the intermediate second mold cavity 53). The first temperature controlling means 3 includes an internal chamber (or passage) 128 within first die 11, which is in fluid communication with a first heat exchanger 131 by means of conduits 134 and 137, through which a first heat exchange fluid (not shown) is circulated. Conduit 134 is in fluid communication with passage 128 by means of an aperture 155 in first die 11, and conduit 137 is in fluid communication with passage 128 by means of an aperture 152 in first die 11. Apertures 152 and 155, and conduits 134 and 137 may optionally include quick-disconnect fittings (not shown). The second temperature controlling means 5 includes an internal chamber (or passage) 140 within slidable portion 23 of second die 17, which is in fluid communication with a second heat exchanger 143 by means of conduits 146 and 149, through which a second heat exchange fluid (not shown) is circulated. Conduit 146 is in fluid communication with passage 140 by means of an aperture 161 in slidable portion 23, and conduit 149 is in fluid communication with passage 140 by means of an aperture 158 in slidable portion 23. Apertures 158 and 161, and conduits 146 and 149 may optionally further include quick-disconnect fittings (not shown).

The first mold cavity 38 and the second mold cavity 41 (and correspondingly intermediate second mold cavity 53) may be maintained at different temperatures (including different rates of temperature increase and/or decrease) by means of the separate temperature controlling means 3 and 5. Such separate control of temperature is desirable when different temperatures are required for injection of plastic material into first mold cavity 38, and the introduction of a coating composition into (and optional curing thereof in) intermediate mold cavity 53, as will be discussed in further detail herein. The temperatures at which the first, second and intermediate second mold cavities are maintained may be selected from those related temperatures as discussed in further detail herein. For example, the first mold cavity may be maintained at a temperature of from 2°C (35°F) to 163°C (325°F), or more typically 16°C (60°F) to 93°C (200°F); while the second mold cavity and/or intermediate second mold cavity are maintained at a temperature of from 38°C (100°F) to 177°C (350°F), or more typically 66°C (150°F) to 149°C (300°F).

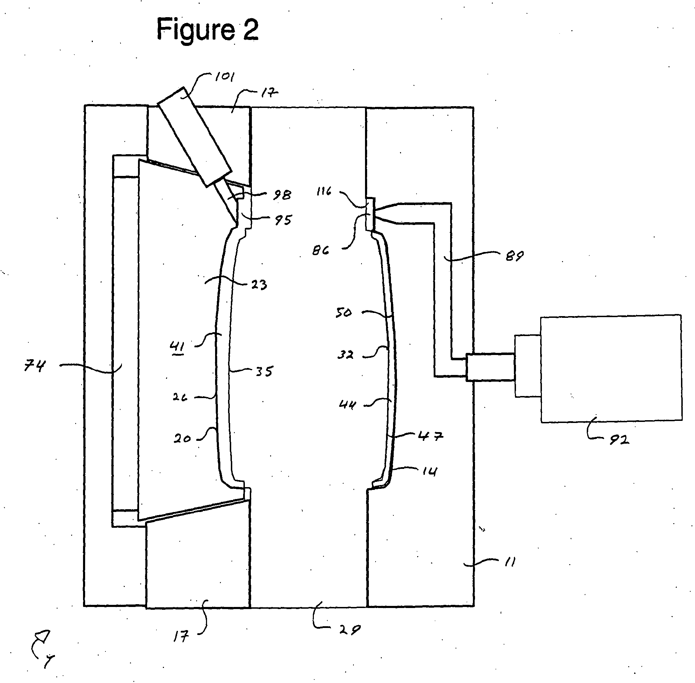

In the method of the present invention and with reference to Figure 1, first die 11 is engaged with core 29 such that molding surface 32 of core 29 and internal surface 14 of first die 11 together define first mold cavity 38. With reference to Figure 2, a plastic material 44 is introduced into first mold cavity 38 to form an uncoated molded article 44 having a second surface 47 that abuts molding surface 32 of core 29, and a first surface 50 that is substantially opposed to second surface 47 and which abuts internal surface 14 of first die 11.

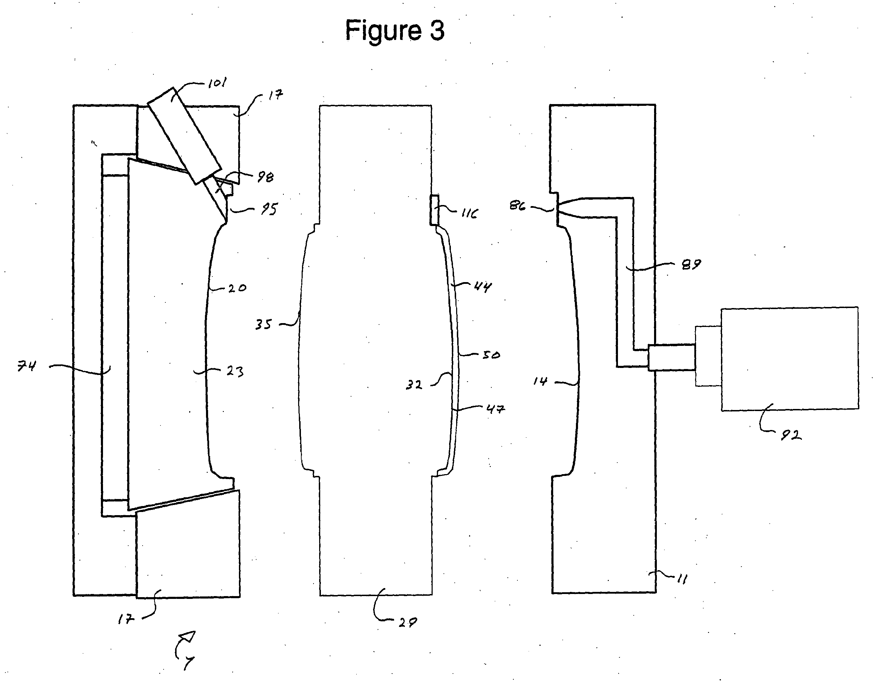

The molded article may optionally include at least one integrally formed plastic extension, which for example, facilitates handling of the molded article during further production steps. Such integrally formed plastic extensions may be later removed from the molded article (e.g., by cutting them off). Molded article 44 of Figures 2 and 3 includes an integrally formed plastic tab 116. Tab 116 facilitates both handling and coating of molded article 44 (e.g., by ensuring that only the first surface 50 is coated), as will be discussed further herein.

The molding surface (e.g., 32) of core 29 and internal surface 14 of first die 11 that together define first mold cavity 38 may each independently include surface features (e.g., impressions and/or raised portions) (not shown) that serve to provide the uncoated plastic molded article formed therein with surface features and/or extensions (not shown). For example, imprinting surface roughness features (not shown) into the first surface 50 of molded plastic article 44 may improve the adhesion of the in-mold coating subsequently applied thereto. Forming molded plastic article 44 with extensions (not shown) on its second surface 47 may be desirable for purposes of attaching the molded article to another structure, e.g., the support structure of an automotive dash board.

The plastic material may be introduced into first mold cavity 38 under conditions of elevated pressure and in a metered amount by known means. For example, a piston (not shown) may be included between reservoir 92 and conduit 89, which serves to introduce a metered amount of plastic material into first mold cavity 38. The pressure at which the plastic material is introduced into first mold cavity will depend in part on the viscosity of the plastic material, e.g., a higher viscosity plastic material will typically require a higher injection pressure. In an embodiment of the present invention, a thermoplastic material (e.g., thermoplastic polycarbonate), is introduced into first mold cavity at an injection pressure of from 1000 psi to 50,000 psi, and more typically at a pressure of from 10,000 psi to 20,000 psi.

The thermoplastic material that is introduced into the first mold cavity, to form the uncoated molded article, may be selected from thermosetting plastic materials and/or thermoplastic materials. As used herein and in the claims, the term "thermosetting plastic material" and similar terms means plastic materials having a three dimensional crosslinked network resulting from the formation of covalent bonds between chemically reactive groups, e.g., active hydrogen groups and free isocyanate groups. In addition, as used herein and in the claims the term "thermosetting" is inclusive of thermal curing (e.g., curing at abient or elevated temperatures) and/or curing my means other than thermal, e.g., by means of actinic light.

Thermosetting plastic materials that may be introduced into the first mold cavity to form the uncoated molded article, include those known to the skilled artisan, e.g., crosslinked polyurethanes, crosslinked polyepoxides, crosslinked polyesters and crosslinked polycarbonates (e.g., formed from allyl functional carbonate monomers and oligomers). Of the thermosetting plastic materials, crosslinked polyurethanes are preferred. The uncoated molded article may be fabricated from crosslinked polyurethanes by the art-recognized process of reaction injection molding. In the present invention, reaction injection molding typically involves injecting separately, and preferably simultaneously, into the first mold cavity: (i) an active hydrogen functional component (e.g., a polyol and/or polyamine); and (ii) an isocyanate functional component (e.g., a diisocyanate such as toluene diisocyanate, and/or dimers and trimers of a diisocyanate such as toluene diisocyanate). Alternatively, the active hydrogen functional component and the isocyanate functional component may be injected into the first mold cavity together through a single injection port or head (e.g., a reaction injection mixing head), as is known to the skilled artisan. The filled first mold cavity may optionally be heated to ensure and/or hasten complete reaction of the injected reactive components.

As used herein and in the claims, the term "thermoplastic material" means a plastic material that has a softening or melting point, and is substantially free of a three dimensional crosslinked network resulting from the formation of covalent bonds between chemically reactive groups, e.g., active hydrogen groups and free isocyanate groups. Examples of thermoplastic materials that may be introduced into the first mold cavity to form the uncoated plastic molded article include, but are not limited to, thermoplastic polyurethane, thermoplastic polyurea, thermoplastic polyimide, thermoplastic polyamide, thermoplastic polyamideimide, thermoplastic polyester (e.g., polyethylene terephthalate and polybutylene terephthalate), thermoplastic polycarbonate, thermoplastic polysulfone, thermoplastic polyketone, thermoplastic polyalkylenes (e.g., thermoplastic polyethylene and thermoplastic polypropylene), thermoplastic acrylonitrile-butadiene-styrene and thermoplastic compositions containing one or more such recited thermoplastic materials.

Of the thermoplastic materials that may be introduced into the first mold cavity, thermoplastic polycarbonates are preferred. The uncoated plastic molded article (e.g., article 44) may be fabricated from thermoplastic materials by the art-recognized process of injection molding, in which a molten stream of thermoplastic material (e.g., molten thermoplastic polycarbonate) is injected into the first mold cavity, which may be optionally heated. A preferred thermoplastic material that may be introduced into the first mold cavity to form the uncoated molded article is thermoplastic polycarbonate, e.g., MAKROLON thermoplastic polycarbonate, commercially available from Bayer MaterialScience LLC.

The thermosetting plastic materials and/or thermoplastic materials that may be introduced into the first mold cavity, may optionally be reinforced with a material selected from glass fibers, glass beads, carbon fibers, nano-tubular carbon fibers, boron fibers, metal fibers and combinations thereof. The reinforcing fibers, and the glass fibers in particular, may have sizings on their surfaces to improve miscibility and/or adhesion to the plastics into which they are incorporated, as is known to the skilled artisan. Glass fibers are a preferred reinforcing material in the present invention. If used, the reinforcement material (e.g., glass fibers) is typically present in the thermosetting plastic materials and/or thermoplastic materials that are introduced into the first mold cavity in a reinforcing amount (e.g., in an amount of from 5 percent by weight to 60 percent by weight, based on the total weight of the uncoated molded plastic article).

The plastic material introduced into the first mold cavity to form the uncoated molded article may further contain one or more functional additives other than or in addition to the reinforcing materials. Additives that may be present in the plastic material from which the uncoated molded article is formed include, but are not limited to, antioxidants, colorants, e.g., pigments and/or dyes, mold release agents, fillers (e.g., calcium carbonate and barium sulfate), ultraviolet light absorbers, fire retardants and mixtures thereof. Additives may be present in the plastic material from which the uncoated molded article is formed in functionally sufficient amounts, e.g., in amounts independently from 0.1 percent by weight to 10 percent by weight, based on the total weight of the plastic material.

With reference to Figure 3, after formation of molded article 44 within first mold cavity 38, core 29 is disengaged from first die 11. Second die 17 is also disengaged from core 29, if it was previously engaged therewith. Disengaging the dies from the core allows the core to be freely rotated. Second surface 47 of uncoated molded plastic article 44 remains in abutting contact with molding surface 32 of core 29 after first die 11 is disengaged from core 29.

With reference to Figure 4, core 29 is rotated about its longitudinal axis 104 (as indicated by arcuate arrow 107) with uncoated molded article 44 still in contact with molding surface 32. Core 29 is rotated such that uncoated molded article 44 is aligned with internal surface 20 of second die 17. In light of the opposed positioning of first die 11 and second die 17, core 29 is rotated through 180° to so align the uncoated molded plastic article with the second die. More particularly, core 29 is rotated such that first surface 50 of uncoated molded article 44 is aligned with internal surface 20 of second die 17.

In the next step, second die 17 is engaged with core 29. With reference to Figure 5, second die 17 is engaged with core 29 in such a way that internal surface 20 of second die 17 and first surface 50 of uncoated molded plastic article 44 together define an intermediate second mold cavity 53. Intermediate second mold cavity 53 has a volume that is typically less than the volume of second mold cavity 41 (e.g., due to the presence of uncoated molded article 44 within second mold cavity 41).

When second die 17 is engaged with core 29 so as to form intermediate second mold cavity 53, first die 11 may optionally also be engaged with core 29 to reestablish first mold cavity 38. In Figure 5, first mold cavity 38 is defined by molding surface 35 of core 29 and internal surface 14 of first die 11. The concurrent formation of first mold cavity 38 and intermediate second mold cavity 53 (as represented in Figure 5) allows for the formation of a subsequent uncoated molded article in first mold cavity 38 concurrently with the introduction of a coating composition into intermediate second mold cavity 53.

A coating composition is next introduced into intermediate second mold cavity 53 from second reservoir 101 through conduit 98 and second die port 95. Typically, the coating composition is introduced into intermediate second mold cavity 53 in an amount such that intermediate second mold cavity 53 is less than totally filed therewith, as represented in Figure 6.

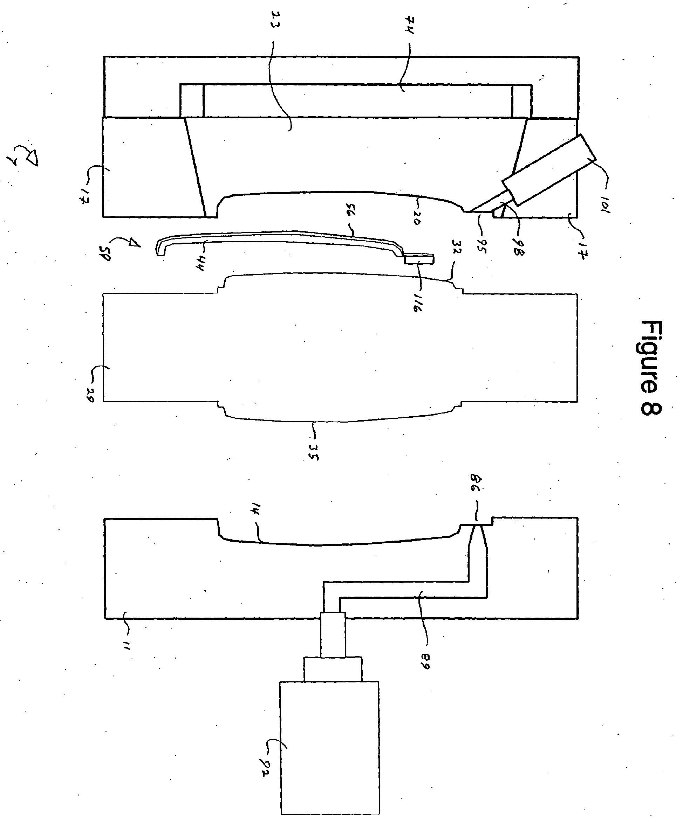

More particularly, coating composition 56 is introduced into intermediate mold cavity 53 through second die port 95 and initially strikes a facing surface of tab 116. The coating formed on tab 116 typically includes surface defects (e.g., commonly referred to as injection coating defects) (not shown). When tab 116 is later removed from coated molded article 59 (Figure 8), the coating injection defects are correspondingly removed therewith. In addition, tab 116 ensures that the introduced / injected coating composition is only applied to first surface 50 of molded article 44, by preventing the injected coating composition from getting under molded article 44 and between second surface 47 thereof and molding surface 32 of core 29.

The coating composition introduced into the second mold cavity in the method of the present invention may be selected from thermoplastic and/or thermosetting coating compositions. Thermoplastic coating compositions may include one or more of those thermoplastic polymers recited previously herein with regard to the thermoplastic material introduced into the first mold cavity (e.g., thermoplastic polyurethane and/or thermoplastic polycarbonate).

Preferably, the coating composition introduced into the second mold cavity is a thermosetting (or curable) coating composition that is capable of at least being partially cured (polymerized or cross-linked) therein. The thermosetting or curable coating composition may be selected from one-component compositions or two-component coating compositions that are known to the skilled artisan. One-component coating compositions include, for example, reactants having blocked isocyanate groups and reactants having active hydrogen groups. Two-component coating compositions include, for example: reactants having unblocked (or freely reactive) groups, such as free isocyanate groups and oxirane groups; and reactants having active hydrogen groups, such as hydroxyl, thiol, primary and secondary amines, or carboxylic acid groups. The reactants / components of a two-component coating composition are typically mixed together prior to injection into the mold, or are injected separately into the mold in such a way as to result in mixing upon injection. The coating compositions may include resins having backbones selected from, for example, polyethers (or polyepoxides), polyesters, polycarbonates, polyurethanes, poly(meth)acrylates and combinations thereof. Coating compositions that may be used in the method of the present invention include, but are not limited to, those described in United States Patent No.'s 4,081,578, 4,293,659, 4,331,735, 4,366,109 and 4,668,460, the pertinent disclosures of which are incorporated by reference herein.

In an embodiment of the present invention, the coating composition introduced into the second mold cavity includes monomers and/or oligomers having terminal and/or pendent ethylenically unsaturated groups that are cured by free radical polymerization initiated by, for example, heat activated peroxide initiators or ultraviolet light. More particularly, the coating compositions typically include urethane components having terminal and/or pendent acrylate groups. In an embodiment of the present invention, the coating composition includes: the reaction product of a multi-functional isocyanate (e.g., toluene diisocyanate, methylene di-phenyl isocyanate, isophorone diisocyanate or condensates thereof) and a hydroxyl functional acrylate (e.g., 2-ethylhydroxy acrylate); a radical polymerization initiator (e.g., di-tertiary butyl peroxide); and optionally other multi-functional ethylenically unsaturated components (e.g., mono- and poly-alkyleneglycol diacrylates, such as diethylene glycol diacrylate). The coating composition may also include the reaction product of an epoxide (oxirane) functional material (e.g., the reaction product of trimethylol propane and epichlorohydrin) and a hydroxyl functional acrylate (e.g., 2-ethylhydroxy acrylate).

Thermosetting coatings introduced into the second mold cavity are at least partially cured, and are preferably substantially fully cured within the mold before removal of the coated molded plastic article there from. If cured by the application of actinic light (e.g., ultraviolet light), the second die typically must be fitted with a window to allow the introduction of such actinic light therein. If cured by means of free radical polymerization, the application of heat is typically required to activate the radical polymerization initiator. While two-component coating compositions do not necessarily require elevated temperatures to achieve cure, the application of heat is typically employed to accelerate the cure process. In general, with thermosetting coating compositions: cure times of 10 seconds to 60 minutes, typically 10 seconds to 2 minutes, and more typically 30 seconds to 30 minutes; and cure temperatures of 38°C (100°F) to 177°C (350°F) or 66°C (150°F) to 149°C (300°F), are employed.

The coating composition that is introduced into the second mold cavity may include additives. Classes of additives that may be included in the coating composition include, but are not limited to: static colorant pigments (e.g., inorganic and/or organic pigments); conductive pigments (e.g., conductive carbon blacks, carbon fibers and metallic pigments); photochromic materials; fillers (e.g., clays and talcs); ultraviolet light absorbers; thermal stabilizers; flow control agents; thickeners; and combinations thereof. The amount of additives included in the coating composition may vary widely. Typically, the coating composition contains from 0.1 to 50 percent by weight, more typically 0.1 to 20 percent by weight of additives, based on the total weight of the coating composition.

Static colorant pigments (e.g., TiO₂) do not appreciably change color upon exposure to ultraviolet (UV) light. Photochromic materials or substances (e.g., photochromic dyes and/or pigments) reversibly change color upon exposure to UV light, as is known to the skilled artisan. Examples of photochromic substances that may be included in the coating composition include art-recognized inorganic and organic photochromic substances. Examples of organic photochromic substances that may be used include, but are not limited to, spiro(indoline)naphth-oxazines, spiro(indoline)benzoxazines, chromenes (such as benzopyrans and naphthopyrans), organo-metal dithizonates (e.g., mercury dithizonates), fulgides (e.g., 3-furyl and 3-thienyl fulgides), fulgimides (e.g., 3-furyl and 3-thienyl fulgimides) and combinations thereof. The use of photochromic substances in the coating composition results in a coated molded article having photochromic properties, such as photochromic ophthalmic lenses, photochromic sun lenses and photochromic glazings (e.g., automotive and architectural windows).

The coating composition is introduced into the intermediate second mold cavity (or between the internal surface of the second die and the second surface of the uncoated molded plastic article) in an amount at least sufficient such that the coated molded plastic article has a coating thickness that provides a desired level of properties (e.g., smoothness, weatherability, scratch resistance and/or photochromaticity). Generally, the coating composition is introduced into the intermediate second mold cavity (or between the internal surface of the second die and the first surface of the uncoated molded plastic article) in an amount such that the coated molded plastic article has a coating thickness of 0.1 to 50 mils (2.54 to 1270 µm), typically from 0.5 to 20 mils (12.7 to 508 µm), and more typically from 0.5 to 3 mils (12.7 to 76.2 µm).

A portion of the first surface of the uncoated molded article may be masked prior to coating of the molded article within the mold apparatus (e.g., before introduction of the coating composition into intermediate second mold cavity 53). Masking a portion of first surface 50 of molded article 44 may be achieved by means that are known to the skilled artisan (e.g., contact masking means, such as masking tapes). For example, when the mold apparatus is opened, core 29 may be rotated to an intermediate position (not shown) to allow for the application of a mask to first surface 50 of molded article 44. Alternatively, slidable portion 23 of second die 17 may include a masking extension (e.g., reversibly retractable masking extension 119) as discussed previously herein with reference to Figures 5 and 11. If a separate mask is applied to first surface 50 of molded article 44, the mask may be removed after in-mold coating of the molded article (e.g., after opening the mold apparatus, after removing the coated molded article from core 29, and/or before fully curing the applied / injected coating).

With reference to Figure 6, concurrent or substantially concurrent with the introduction of coating composition 56 into intermediate second mold cavity 53, a plastic material (not shown) may optionally be introduced into first mold cavity 38. Concurrent in-mold coating and plastic article molding operations provide improved process efficiency. Upon completion of the in-mold coating operation and disengagement of the first and second dies from the core, a subsequent uncoated molded plastic article is ready to be rotated on the core and aligned with and engaged with the second die for in-mold coating.

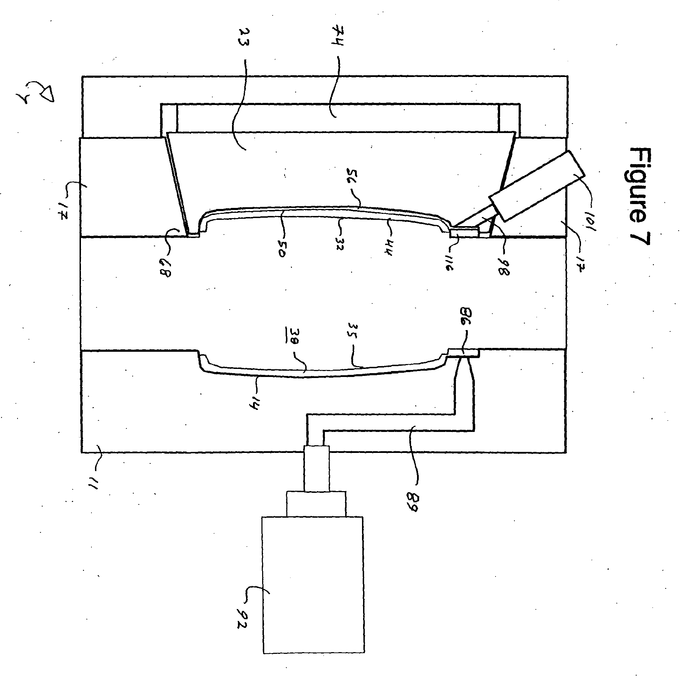

After introduction of the coating composition into intermediate second mold cavity 53, slidable portion 23 of second die 17 is moved towards core 29, and the volume of intermediate second mold cavity 53 is reduced. The reduction in the volume of intermediate second mold cavity 53 results in the coating composition introduced therein to spread over at least a portion of, and preferably over the whole of, first surface 50 of uncoated molded article 44. See Figures 6 and 7. More particularly, slidable portion 23 of second die 27 is moved from a first position 65 (Figure 6) to a second position 68 (Figure 7), which results in internal surface 20 of second die 17 being closer to first surface 50 of uncoated molded article 44, which concurrently results in a reduction in the volume of intermediate second mold cavity 53 and the resultant spreading of the coating 56 over first surface 50. As discussed previously herein, slidable portion 23 is reversibly moved towards core 29 by means of drive arm 74.

Slidable portion 23 is moved towards core 29 in such a way as to subject the introduced coating 56 to a pressure that is at least sufficient to result in spreading of coating 56 over first surface 50 of molded article 44. In moving slidable portion 23 towards core 29, the introduced coating 56 may be subjected to a pressure of from 5 psi to 30,000 psi, typically from 100 psi to 10,000 psi, and more typically from 1000 psi to 7000 psi.

When slidable portion 23 of second die 17 is moved towards core 29 to spread the introduced coating composition 56 over first surface 50 of molded article 44, second die port 95 is typically plugged or otherwise occluded (not shown). Plugging of second die port 95 prevents the coating composition 56 from being pushed back up through conduit 98 into second reservoir 101 by the movement of slidable portion 23 towards core 29. Effective plugging of second die port 95 may be achieved by a piston (not shown) in conduit 98 or second reservoir 101.

In an embodiment of the present invention, the uncoated molded article includes a molded-in seal. A surface of the slidable portion of the second die abuts the molded-in seal of the uncoated molded article. The abutting relationship between the molded-in seal and the surface of the slidable portion serves to substantially seal the intermediate second mold cavity, thus preventing a coating composition introduced therein from escaping from the cavity and coating unwanted portions of, for example, the molded article, the core and/or the second die. As used herein and in the claims with regard to the molded article, the term "molded-in" means a feature, such as a seal, that has been formed concurrently with the mold formation of the molded article. As such, the molded-in seal comprises plastic material, and is substantially integral and continuous with the plastic material of the molded article. In an embodiment of the present invention, the molded-in seal comprises the same plastic material as that of the uncoated molded article. Alternatively, the molded-in seal may be comprise a different plastic material from that of the uncoated molded article, and may be formed in mold cavity separate from that of the first mold cavity (not shown).

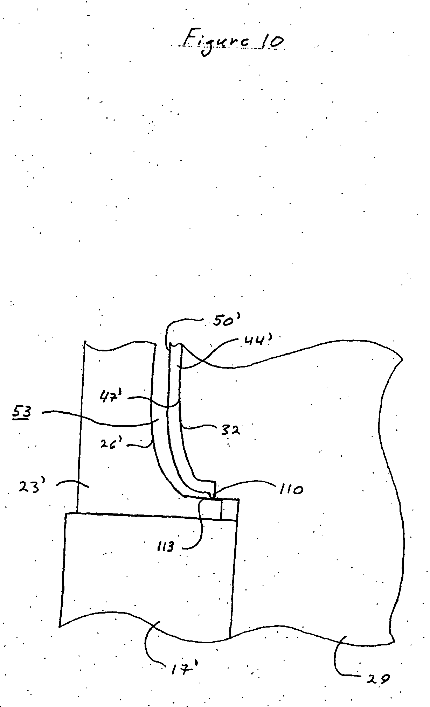

With reference to Figure 10, a molded article 44' having a molded-in seal 110 is depicted. Second surface 47' of molded article 44' abuts molding surface 32 of core 29. First surface 50' of molded article 44' faces internal surface 26' of slidable portion 23' of second die 17'. Slidable portion 23' has a surface 113' that abuts molded-in seal 110, when second die 17' is engaged with core 29. Abutment of surface 113 of slidable portion 23' of second die 17' and molded-in seal 110 of molded article 44' serves to seal intermediate second mold cavity 53. As discussed previously herein, after injection of coating composition (not shown in Figure 10) into intermediate second mold cavity 53, slidable portion 23' is moved towards core 29, thus reducing the volume of the second mold cavity 53 and causing the coating composition to spread over at least a portion of first surface 50' of molded article 44'.

After slidable portion 23 of second die 17 has been moved towards core 29 causing the coating 56 to spread over at least a portion of first surface 50 of uncoated molded plastic article 44, the coating is at least partially cured (if it is a thermosetting coating composition). After a period of time that is at least sufficient to spread and/or cure the coating composition, at least second die 17 is disengaged from core 29, and the coated molded plastic article 59 is removed from core 29, e.g., as depicted in Figure 8.

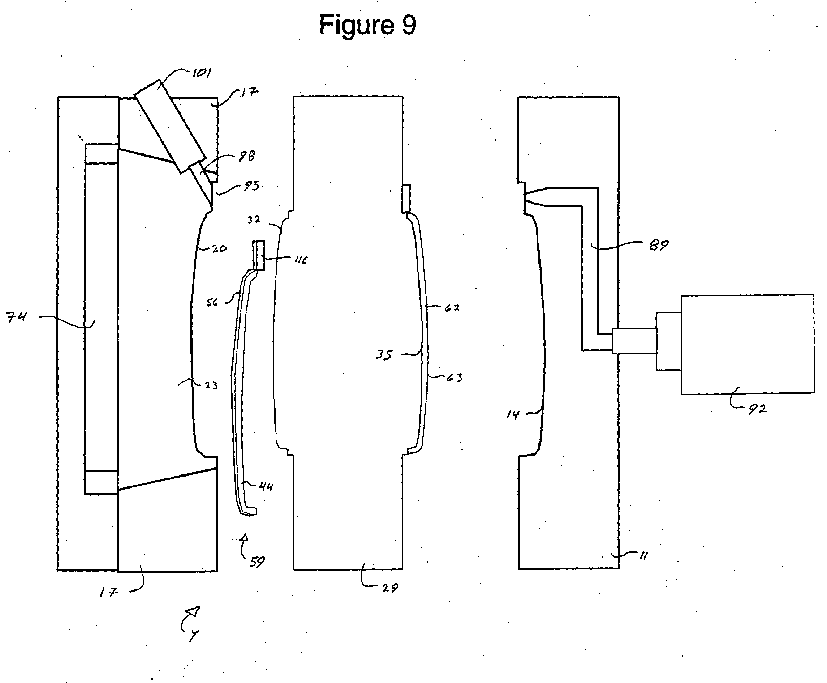

After formation of the coated molded article and disengagement of the second die from core, the slidable portion of the second die may optionally be moved to an initial position. For example, with reference to Figures 1, 6, 7 and 8, after formation of coated molded article 59, and disengagement of second die 17 from core 29, slidable portion 23 of second die 17 may be moved from second position 68 to first position 65. Moving the slidable portion 23 of the second die 17 to an initial position allows for the subsequent establishment of intermediate second die cavity 53 when a subsequently molded plastic article (e.g., molded article 62 of Figure 9) is aligned with internal surface 20 of second die 17.

Prior to removal of coated molded article 59, core 29 may be rotated to an intermediate position between first die 11 and second die 17. For example, with general reference to Figure 8, core 29 may be rotated through 45° (either into or out of the page) (not shown) prior to removal of coated molded article 59 from core 29. The coated molded article may optionally be treated or modified prior to its removal from the core. For example, the coating of the coated molded article may be sanded, buffed or impregnated /imbibed (e.g., with a photochromic material and/or ultraviolet light stabilizers) prior to removal of the coated molded article from the core. Such modifications to the coated molded article may be performed when the core is rotated to an intermediate position.

In an embodiment of the present invention, the molding surface defining the first mold cavity and the surface defining the second mold cavity are different / separate molding surfaces of the core. As such, the first mold cavity may be formed concurrently with the intermediate second mold cavity, which allows for the concurrent performance of in-mold coating and molded article formation steps (e.g., the concurrent performance of method steps B and F with steps C and G as recited previously herein). More particularly, and with reference to Figure 9, a further uncoated molded plastic article 62 is formed concurrently or substantially concurrently with the in-mold coating step (as discussed previously herein). Upon removal of coated molded plastic article 59 from molding surface 32 of core 29, core 29 may be rotated to align the exposed second surface 63 of uncoated molded article 62 with internal surface 20 of second die 17. Second die 17 may then be engaged with core 29, such that second surface 63 of molded article 62 and internal surface 20 of second die 17 together define intermediate second mold cavity 53. A subsequent in-mold coating step may then be performed in accordance with the steps as previously described herein.

With reference to Figure 8, after removal of coated molded article 59 from core 29, core 29 may be rotated to align molding surface 32 with internal surface 14 of first die 11. Alternatively, core 29 may not be rotated after removal of coated molded article 59, in which case core 29 may be engaged with first die 11 thus forming first mold cavity 38 defined by molding surface 35 and internal die surface 14 (see for example first mold cavity 38 of Figure 5). The previously described plastic injection, core rotation, coating injection, and coated article removal steps may then be performed again.

In an embodiment of the present invention, the intermediate second mold cavity is not formed prior to the introduction of the coating composition, but rather is formed upon introduction of the coating composition into the mold. When the second die (e.g., 17) is engaged with the core (e.g., 29), the second surface of the plastic molded article (e.g., first surface 50) may substantially abut the internal surface (e.g., 20) of the second die. Alternatively, the internal surface of the second die and the second surface of uncoated molded article may together define an initial second mold cavity having a volume. The volume of the initial second mold cavity is typically less than the volume of the second mold cavity.

As the coating composition is introduced between the internal surface of the second die and the second surface of the molded article, the internal surface of the second die (i.e., the internal surface of the slidable portion) is concurrently separated from the second surface of the uncoated molded article thus forming the intermediate second mold cavity. The slidable portion of the second die may be held (or maintained) at a pressure (a positive or neutral pressure) that is lower than the positive pressure at which the coating composition is introduced between the internal surface of the second die and the second surface of the molded article. The greater positive pressure of the introduced coating composition accordingly causes the slidable portion and its internal surface to move away from the second surface of the uncoated molded article (and the core) and to form the intermediate second mold cavity. The volume of the resulting intermediate second mold cavity is greater than the volume of the initial second mold cavity. The positive pressure under which the coating composition is introduced between the internal surface of the second die and the second surface of the uncoated molded article is generally from 5 psi to 30,000 psi, typically from 100 psi to 10,000 psi, and more typically from 1000 psi to 7000 psi. After introduction of the coating composition is complete, the slidable portion of the second die is moved back towards the core, the volume of the intermediate second mold cavity is reduced and the introduced coating is spread over the second surface of the uncoated molded article, as described previously herein.

Alternatively, as the coating composition is introduced between the internal surface of the second die and the second surface of the molded article (which are in either abutting relationship or together defining the initial second mold cavity), the slidable portion of the second die may itself be concurrently moved away from the core by means other than the pressure of the introduced coating composition. For example, concurrent with the introduction of the coating composition, the slidable portion of the second die may be pulled away from the core by a reversible drive arm (e.g., drive arm 74). The slidable portion of the second die may be pulled away from the core (and the second surface of the molded article) at a rate that is at least commensurate with the rate at which the coating composition is introduced between the interior surface of the second die and the second surface of the molded article.

The method of the present invention may be used to prepare numerous types of coated molded plastic articles. Classes of coated molded articles that may be prepared by the method of the present invention include, but are not limited to, lenses, ophthalmic lenses, sunshade lenses, glazings, interior (passenger compartment) motor vehicle components (e.g., interior panels and dash board components), exterior motor vehicle components (e.g., exterior panels), motor vehicle engine-compartment components (e.g., filter housings and fuel injection housings), architectural panels (e.g., office walls and cubicle dividers) and housings for electronic devices (e.g., business/office machines, computer housings, portable phones and pagers). Coated lenses that may be prepared according to the present invention include, for example, lenses for lights such as motor vehicle head lamps, break lights, turn signal lights and landing lights on aircraft. Coated glazings that may be prepared according to the present invention include, for example, architectural windows, motor vehicle windows and aircraft windows.

As described previously herein, the coating composition may include a photochromic material, in which case the coated molded article prepared by the method of the present invention is a photochromic coated molded article. Photochromic molded articles that may be prepared by the present method include, but are not limited to photochromic ophthalmic lenses, photochromic sun shade lenses (i.e., non-corrective photochromic sunglasses or spectacles), and photochromic glazings, such as photochromic architectural windows, photochromic motor vehicle windows and photochromic aircraft windows. Photochromic coated molded articles prepared in accordance with the present method may have an underlying molded article fabricated from thermoplastic polycarbonate.

The present invention has been described with reference to specific details of particular embodiments thereof. It is not intended that such details be regarded as limitations upon the scope of the invention except insofar as and to the extent that they are include in the accompanying claims.

## Claims

1. A method of preparing a coated molded article comprising:
(A) providing a mold apparatus comprising,
(i) a first die having an internal surface,
(ii) a second die having an internal surface, said second die having a reversibly slidable portion, said reversibly slidable portion having an internal surface, the internal surface of said reversibly slidable portion defining substantially the internal surface of said second die, and
(iii) a core having one or more molding surfaces, and said core
being rotatable,
wherein said first die and said second die are each reversibly and
separately engageable with said core,
when said first die is engaged with said core the internal surface of said first die and one of said molding surfaces of said core together define a first mold cavity,
when said second die is engaged with said core said internal surface of said second die and one of said molding surfaces of said core together define a second mold cavity, the molding surface of said core defining said second mold cavity being the same or different than the molding surface of said core defining said first mold cavity;
(B) engaging at least said first die with said core and forming said first mold cavity;
(C) introducing plastic material into said first mold cavity to form an uncoated molded article having a second surface that abuts the molding surface of said core which defines said first mold cavity, and having a first surface that is substantially opposed to said second surface;
(D) disengaging at least said first die from said core;
(E) rotating said core with said uncoated molded article on said molding surface of said core, and aligning the first surface of said uncoated molded article with the internal surface of said second die;
(F) engaging said second die with said core such that the internal surface of said second die and the first surface of said uncoated molded article together define an intermediate second mold cavity, said intermediate second mold cavity having a volume;
(G) introducing a coating composition into said intermediate second mold cavity;
(H) moving said reversibly slidable portion of said second die towards said core, thereby reducing the volume of said intermediate second mold cavity and spreading said coating composition introduced into said intermediate second mold cavity over at least a portion of said first surface of said uncoated molded article, thereby forming a coated molded article;
(I) disengaging at least said second die from said core;
(J) removing said coated molded article from said core; and
(K) optionally rotating said core such that one of said molding surfaces of said core is aligned with the internal surface of said first die, and repeating steps (B) through (J).

2. The method of Claim 1 wherein the molding surface of said core defining said first mold cavity and said molding surface of said core defining said second mold cavity are different molding surfaces, at the completion of step (E) one of said molding surfaces of said core is aligned with the internal surface of said first die, steps (B) and (F) are performed substantially concurrently, and steps (C) and (G) are performed substantially concurrently.

3. The method of Claim 1 wherein said uncoated molded article comprises a molded-in seal, said molded-in seal abutting a surface of said slidable portion of said second die, abutment of said molded-in seal and said surface of said slidable portion sealing substantially said intermediate second mold cavity.

4. The method of Claim 1 wherein the plastic material introduced into said first mold cavity is selected from the group consisting of thermoplastic material, thermosetting plastic material and combinations thereof.

5. The method of Claim 4 wherein the plastic material introduced into said first mold cavity is a thermoplastic material selected from the group consisting of thermoplastic polyurethane, thermoplastic polyurea, thermoplastic polyimide, thermoplastic polyamide, thermoplastic polyamideimide, thermoplastic polyester, thermoplastic polycarbonate, thermoplastic polysulfone, thermoplastic polyketone, thermoplastic polyethylene, thermoplastic polypropylene, thermoplastic acrylonitrile-butadiene-styrene and thermoplastic compositions containing one or more thereof.

6. The method of Claim 4 wherein said plastic material introduced into said first mold cavity comprises a reinforcing material selected from the group consisting of glass fibers, glass beads, carbon fibers, nano-tubular carbon fibers, boron fibers, metal fibers and combinations thereof.

7. The method of Claim 1 wherein said coating composition is selected from the group consisting of thermosetting coating compositions, thermoplastic coating compositions and combinations thereof.

8. The method of Claim 1 wherein the coating composition introduced into said intermediate second mold cavity is a curable coating composition, and the introduced coating composition is at least partially cured before said second die is disengaged from said core.

9. The method of Claim 8 wherein said coating composition comprises ethylenically unsaturated polyurethane and free radical polymerization initiator.

10. The method of Claim 1 wherein the coating of said coated molded article has a thickness of from 0.1 mils to 50 mils.

11. The method of Claim 1 wherein the coated molded article is selected from the group consisting of lenses, ophthalmic lenses, sun shade lenses, glazings, interior motor vehicle components, exterior motor vehicle components, motor vehicle engine-compartment components, architectural panels and housings for electronic devices.

12. The method of Claim 1 wherein said coating composition comprises a photochromic material, and said coated molded article is a photochromic coated molded article.

13. The method of Claim 12 wherein said photochromic coated molded article is selected from photochromic ophthalmic lenses, photochromic sun shade lenses and photochromic glazings.

14. The method of Claim 1 wherein a portion of said first surface of said uncoated molded article is masked prior to introducing said coating composition into said intermediate second mold cavity.

15. The method of Claim 14 wherein said reversibly slidable portion of said second die further includes at least one masking extension, said masking extension extending beyond said internal surface of said reversibly slidable portion of said second die towards said core, said masking extension abutting said portion of said first surface of said uncoated molded article prior to introducing said coating composition into said intermediate second mold cavity.

16. The method of Claim 15 wherein said masking extension is a reversibly retractable masking extension.

17. The method of Claim 1 wherein said mold apparatus further comprises a first means of controlling the temperature of said first mold cavity, and a second means of controlling the temperature of said second mold cavity and said intermediate second mold cavity.

18. The method of Claim 17 wherein said first mold cavity, and said second mold cavity and said intermediate second mold cavity are maintained at different temperatures.

19. A method of preparing a coated molded article comprising:
(A) providing a mold apparatus comprising,
(i) a first die having an internal surface,
(ii) a second die having an internal surface, said second die having a reversibly slidable portion, said reversibly slidable portion having an internal surface, the internal surface of said reversibly slidable portion defining substantially the internal surface of said second die, and
(iii) a core having one or more molding surfaces, and said core
being rotatable,
wherein said first die and said second die each reversibly and separately engageble with said core,
when said first die is engaged with said core the internal surface of said first die and one of said molding surfaces of said core together define a first mold cavity,
when said second die is engaged with said core said internal surface of said second die and one of said molding surfaces of said core together define a second mold cavity, the molding surface of said core defining said second mold cavity being the same or different than the molding surface of said core defining said first mold cavity;
(B) engaging at least said first die with said core and forming said first mold cavity;
(C) introducing plastic material into said first mold cavity to form an uncoated molded article having a second surface that abuts the molding surface of said core which defines said first mold cavity, and having a first surface that is substantially opposed to said second surface;
(D) disengaging at least said first die from said core;
(E) rotating said core with said uncoated molded article on said molding surface of said core, and aligning the first surface of said uncoated molded article with the internal surface of said second die;
(F) engaging said second die with said core such that one of,
(i) the internal surface of said second die substantially abuts the first surface of said uncoated molded article, and
(ii) the internal surface of said second die and the first surface of said uncoated molded article together define an initial second mold cavity having a volume;
(G) introducing a coating composition between said internal surface of said second die and said first surface of said uncoated molded article, said internal surface of said second die being concurrently separated from said first surface of said uncoated molded article thus forming an intermediate second mold cavity having a volume, the volume of said intermediate second mold cavity being greater than the volume of said initial second mold cavity;
(H) moving said reversibly slidable portion of said second die towards said core, thereby reducing the volume of said intermediate second mold cavity and spreading said coating composition residing in said intermediate second mold cavity over at least a portion of said first surface of said uncoated molded article, thereby forming a coated molded article;
(I) disengaging at least said second die from said core;
(J) removing said coated molded article from said core; and
(K) optionally rotating said core such that one of said molding surfaces of said core is aligned with the internal surface of said first die, and repeating steps (B) through (J).

20. The method of Claim 19 wherein said coating composition is introduced between said internal surface of said second die and said first surface of said uncoated molded article at a positive pressure, said positive pressure forcing said slidable portion of said second die to move away from said core and form said intermediate second mold cavity.

21. A mold apparatus comprising:
(a) a first die having an internal surface,
(b) a second die having an internal surface, said second die having a reversibly slidable portion, said reversibly slidable portion having an internal surface, the internal surface of said reversibly slidable portion defining substantially the internal surface of said second die; and
(c) a core having one or more molding surfaces, and said core being
rotatable,
wherein said first die and said second die each reversibly and separately engageable with said core,
when said first die is engaged with said core, said internal surface of said first die and one of said molding surfaces of said core together define a first mold cavity,
when said second die is engaged with said core, said internal surface of said second die and one of said molding surfaces of said core, together define a second mold cavity having a volume, the molding surface of said core defining said second mold cavity being the same or different than the molding surface of said core defining said first mold cavity, and
the volume of said second mold cavity being reversibly reduced by reversible movement of said slidable portion towards said core.

22. The mold apparatus of Claim 21 wherein said first die has a first die port through which a first material is introduced into said first mold cavity, and said second die has a second die port through which a second material is introduced into said second mold cavity.

23. The mold apparatus of Claim 21 wherein said first material is a thermoplastic material, and said second material is a coating composition.

24. The mold apparatus of Claim 21 wherein the molding surface of said core defining said first mold cavity and the molding surface of said core defining said second mold cavity are different molding surfaces, said first mold cavity and said second mold cavity being formed substantially concurrently when said first die is engaged with said core and when said second die is engaged with said core.

25. The mold apparatus of Claim 21 wherein said reversibly slidable portion of said second die has a second surface that is substantially opposed to said internal surface of said reversibly slidable portion, and said mold apparatus further comprises a drive arm that is connected to at least a portion of said second surface of said reversibly slidable portion of said second die, said drive arm reversibly moving said reversibly slidable portion of said second die.

26. The mold apparatus of Claim 25 wherein said drive arm is hydraulically driven.

27. The mold apparatus of Claim 21 wherein said reversibly slidable portion of said second die further includes at least one masking extension, said masking extension extending beyond said internal surface of said reversibly slidable portion of said second die towards said core, said masking extension being configured to abut a portion of a first surface of an uncoated molded article residing within said second mold cavity.

28. The mold apparatus of Claim 27 wherein said masking extension is a reversibly retractable masking extension.

29. The mold apparatus of Claim 21 further comprising a first means of controlling the temperature of said first mold cavity, and a second means of controlling the temperature of said second mold cavity.
